Europäisches Patentamt

European Patent Office

Office européen des brevets

(19)

(11) Numéro de publication: **0 188 944**
**B1**

⑫· **FASCICULE DE BREVET EUROPEEN**

④ Date de publication du fascicule du brevet:
08.11.89

㉑ Numéro de dépôt: 85402508.7

㉒ Date de dépôt: **16.12.85**

㊼ Int. Cl.⁴: **G 11 B 5/127**, G 11 B 5/17 //
G11B5/31

�554 Système pour enregistrement perpendiculaire et un procédé de fabrication d'un transducteur magnétique.

㉚ Priorité: **28.12.84 FR 8420025**

㊸ Date de publication de la demande:
**30.07.86 Bulletin 86/31**

㊺ Mention de la délivrance du brevet:
**08.11.89 Bulletin 89/45**

㊴ Etats contractants désignés:
**DE FR GB IT NL**

�title56 Documents cités:
EP-A- 0 031 216
US-A- 2 927 163

PATENTS ABSTRACTS OF JAPAN, vol. 4, no. 138 (P-29)
[620], 27 septembre 1980, page 17 P 29; & JP - A - 55 87
324 (FUJITSU K.K.) 02-07-1980
PATENTS ABSTRACTS OF JAPAN, vol. 5, no. 154 (P-82)
[826], 29 septembre 1981, page 143 P 82; & JP - A - 56 87
215 (TOKYO SHIBAURA DENKI K.K.) 15-07-1981
PATENTS ABSTRACTS OF JAPAN, vol. 8, no. 72 (P-265)
[1509], 4 avril 1984, page 106 P 265; & JP - A - 58 218 018
(NIPPON DENKI K.K.) 19-12-1983
PATENTS ABSTRACTS OF JAPAN, vol. 8, no. 265 (P-318)
[1702], 5 décembre 1984, page 19 P 318; & JP - A - 59 132
410 (SUWA SEIKOSHA K.K.) 30-07-1984
PATENTS ABSTRACTS OF JAPAN, vol. 4, no. 18 (E-171),

�73 Titulaire: **BULL S.A., 121, Avenue de Malakoff,
F-75116 Paris (FR)**

�72 Inventeur: **Desserre, Jacques, 12 Bis rue de la Mairie
Orcemont, F-78120 Rambouillet (FR)**

�74 Mandataire: **Gouesmel, Daniel et al, BULL S.A. Industrial
Property Department 25 avenue de la Grande-Armée
GA-4X018, F-75016 Paris (FR)**

�556 Documents cités: (suite)
13 février 1980, page 35 E 171; & JP - A - 54 157 613
(FUJITSU K.K.) 12-12-1979
PATENTS ABSTRACTS OF JAPAN, vol. 6, no. 252 (P-161)
[1130], 10 décembre 1982, page 3 P 161; & JP - A - 57 147
117 (SONY K.K.) 10-09-1982
PATENTS ABSTRACTS OF JAPAN, vol. 6, no. 108 (P-123)
[986], 18 juin 1982, page 22 P 123; & JP - A - 57 37 712
(FUJITSU K.K.) 02-03-1982
IBM TECHNICAL DISCLOSURE BULLETIN, vol. 15, no. 2,
juillet 1972, pages 516-517, New York, US; R.B.
WATROUS: "Horizontal thin-film head with symmetrical
windings"

## Description

La présente invention concerne un système pour enregistrement perpendiculaire. Elle est notamment applicable à l'enregistement perpendiculaire d'informations à hautes densité linéique et radiale sur les disques magnétiques des mémoires à disques.

On sait que les informations portées par les disques magnétiques sont contenues à l'intérieur de pistes concentriques circulaires et se présentent sous la forme d'une succession de petites cellules magnétiques appelées cellules élémentaires réparties sur toute la longueur de chaque piste. La magnétisation (ou l'aimantation) dans deux cellules magnétiques élémentaires consécutives est de sens opposé et a généralement même module.

On appelle tranducteur les moyens qui permettent soit d'écrire (on dit également enregistrer) les informations sur les disques magnétiques, soit de les lire, soit de réaliser l'une et l'autre de des deux fonctions.

La tendance actuelle du développement des disques magnétiques est de chercher à obtenir des densités radiales de quelques milliers de pistes par centimètre (mesurées suivant le diamètre des disques) et des densités linéiques égales ou supérieures à dix mille changements de sens de magnétisation par centimètre (mesurées suivant la circonférence des pistes).

Un mode préféré d'écriture d'informations permettant l'obtention de telles densités d'enregistrement est le mode d'écriture dit perpendiculaire où l'aimantation dans les cellules élémentaires est perpendiculaire à la couche magnétique d'enregistrement du disque. Dans ce mode, le milieu magnétique constituant la couche est un milieu magnétique anisotrope présentant une direction privilégiée de magnétisation (ou d'aimantation) appelée encore direction de facile aimantation, perpendiculaire à la couche d'enregistrement.

Pour obtenir de très hautes densités linéique et radiale d'informations, on utilise de préférence des transducteurs magnétiques intégrés ou en couches minces dont le circuit magnétique comporte un pôle principal d'écriture lequel est excité magnétiquement par un bobinage, et un pôle auxiliaire.

Il existe divers types de transducteurs intégrés comportant un pôle principal d'écriture.

Lorsque le pôle auxiliaire et le pôle principal du circuit magnétique se trouvent situés d'un même côté par rapport au support d'enregistrement, on dit que le transducteur magnétique est de type sabot. On trouve la description d'un transducteur intégré d'un tel type dans le brevet français N° 2 428 886 déposé la 13 Juin 1978 sous le titre «Support d'informations magnétiques à enregistrement perpendiculaire» par la Compagnie Internationale pour l'Informatique CII HONEYWELL BULL dont l'inventeur est M. Jean-Pierre Lazzari. Le support défile devant le transducteur perpendiculairement au plan des couches minces magnétiques formant les pièces polaires. De préférence, si l'on appelle épaisseur des pièces polaires, la dimension des pôles, mesurée parallèlement au sens de défilement, l'épaisseur du pôle auxiliaire est très supérieure à l'épaisseur du pôle principal d'écriture (généralement plus de 5 fois supérieure), de sorte que la section du pôle auxiliaire est très supérieure à celle du pôle d'écriture.

Le pôle principal d'écriture est réalisé en un matériau magnétique doux, de préférence anisotrope. Dans ce cas, l'axe de difficile aimantation est perpendiculaire au support d'enregistrement. L'écriture des informations sur le support est alors effectuée en faisant défiler celui-ci à vitesse constante et en faisant traverser le bobinage associé au pôle d'écriture par un courant variable représentatif des informations à écrire. Ce courant traverse le bobinage. Le champ magnétique ainsi produit modifie l'équilibre magnétique des pièces polaires. En regard du pôle principal, il y a concentration du flux magnétique, le profil du champ étant fonction de la perméabilité du pôle et de sa très faible épaisseur. Laxe de facile aimantation de la couche magnétique d'enregistrement est perpendiculaire à la surface de celle-ci. La composante, perpendiculaire à cette surface, du champ magnétique a une intensité suffisante qui peut provoquer le renversement de la magnétisation (de l'aimantation) dans cette direction. En regard du pôle auxiliaire, au contraire, le champ magnétique et sa composante perpendiculaire à la surface de la couche sont d'intensité beaucoup moins forte que la même composante en regard du pôle principal d'écriure. (En première approximation, les champs produits au voisinage des pôles ont une intensité variant en raison inverse de la section de ceux-ci, le flux magnétique étant conservatif). L'état magnétique de la couche au niveau du pôle auxiliaire n'est donc pas modifié. Seul le pôle principal intervient donc dans le processus d'écriture.

Lorsque le pôle principal et le pôle auxiliaire sont disposés de part et d'autre du support d'enregistrement, on dit que l'on a affaire à un transducteur de type monopôle, tel que défini par le Professeur Iwasaki dans la revue «IEEE transactions on magnetics» Vol MAG.13, N° 5 de septembre 1977, aux pages 272 à 277. Dans ce cas, le flux magnétique créé par le pôle principal d'écriture traverse le support d'enregistrement et passe à travers le pôle auxiliaire disposé de l'autre côté de ce support.

Il existe certaines versions de transducteurs de type monopôle, qui ne comportent pas de pôle auxiliaire de retour de flux. De tels transducteurs sont par exemple décrits dans les demandes de brevets EP-A-71 489 déposée par la société «Fujitsu Limited» sous le titre «A perpendicular magnetic recording and reproducing head», et EP-A-101 352 déposée par la société américaine «Vertimag Systems Corporation» sous le titre «Read-write head with a planar coil or coils».

Les transducteurs de type sabot et de type monopôle fonctionnant de manière analogue, on a tendance dans le langage courant à appeler de tels transducteurs aussi bien transducteurs à pôle

principal que transducteurs de type monopôle (single pole head en langue anglaise).

Si les transducteurs de type monopôle sont à l'écriture, bien adaptés à l'enregistrement d'informations à haute densité, puisque la longueur des cellules magnétiques élémentaires enregistrés est sensiblement inférieure ou égale à l'épaisseur du pôle principal d'écriture, il n'en est pas de même à la lecture où le rapport signal/bruit de tels transducteurs est relativement peu élevé. Cela est dû à trois phénomènes essentiels:

1. Le fait que le bobinage associé au pôle principal d'écriture est disposé dans un plan perpendiculaire au support d'enregistrement et au sens de défilement des informations,

2. La très haute densité des informations enregistrées sur le support et lues par le transducteur.

3. La distance entre le support et l'extrémité du pôle d'écriture qui lui fait face.

En effet, on montre que plus la densité d'informations est grande, plus le champ magnétique créé par les cellules magnétiques élémentaires du support au voisinage de celuici a une intensité qui décroît extrêmement rapidement lorsque la distance par rapport à la surface du support croît.

Ceci est dû au fort couplage magnétique entre les cellules élémentaires voisines qui entraîne l'existence d'un fort gradient de champ au voisinage de la surface du support.

Dans ces conditions, on considère que le flux magnétique $\Phi$ i entrant dans le pôle principal comprend une partie utile $\Phi$ u produite par l'information qu'on cherche à lire et une partie non utile (productrice de bruit) $\Phi$ e. Ce dernier est du au flux produit par les cellules voisines de celle en regard duquel le pôle se trouve, situées sur la même piste, au flux produit par les cellules des pistes voisines de celle où se trouve l'information lue et au flux produit par des champs magnétiques parasites existant notamment à l'extérieur du support d'enregistrement.

Dans ces conditions, on observe aussi bien expérimentalement que par simulation sur ordinateur, les faits suivants. Lorsque le pôle principal est en situation de capter le maximum de flux $\Phi$ i (par exemple, en face d'une cellule élémentaire), il n'est traversé par le flux magnétique utile que sur une très faible hauteur, (distance de tout point du pôle par rapport à l'extrémité de ce dernier disposée en regard du support, cette extrémité étant elle-même située à 2 ou 3 dixièmes de microns du support), et est par contre soumis au flux non utile $\Phi$ e sur une hauteur beaucoup plus grande, ce dernier étant une cause non négligeable de bruit: (par exemple un pôle principal d'une hauteur de l'ordre de 10 microns, n'est traversé par le flux utile que sur une hauteur de 1 à 3 microns).

On voit donc, qu'un bobinage disposé perpendiculairement au support ne captera le flux utile que sur une très faible partie de sa hauteur, mais captera par contre sur une grande partie de sa hauteur de flux non utile créé par les cellules magnétiques voisines de celles qui produit le flux magnétique utile. Il en résulte donc, que, à la lecture, les transducteurs magnétiques de type monopôle actuellement réalisés, sont peu efficaces.

Ces inconvénients sont remédiés par le système suivant d'invention qui est l'objet de la revendication 1. La revendication 7 contient un procédé de fabrication d'un transducteur utilisé dans un système selon la revendication 1. Un transducteur suivant la première partie de la revendication 1 est connu du JP–A–5 587 324.

La présente invention permet de remédier à ces inconvénients, en disposant le bobinage, au voisinage immédiat de l'extrémité du monopôle, de telle sorte que chaque tour de bobinage perpendiculaire au support capte le maximum de flux utile $\Phi$ u et le minimum de flux parasite $\Phi$ e, le nombre de tours de bobinage par unité de volume étant très élevé. On obtient ainsi un bobinage très compact disposé autour et au voisinage immédiat de l'extrémité du monopôle.

Ainsi la disposition géométrique du bobinage par rapport au pôle permet un couplage magnétique extrêmement fort entre le pôle magnétique et le bobinage. Le bobinage magnétique ainsi disposé, du fait de sa faible hauteur, collecte la plus grande partie du flux magnétique utile $\Phi$ u entrant dans le monopôle et une relativement faible partie de flux $\Phi$ e.

On réalise ainsi un système comprenant un transducteur magnétique de type monopôle dont le rapport signal/bruit à la lecture est relativement plus élevé que les transducteurs de même type selon l'art antérieur.

D'autres caractéristiques et avantages de la présente invention apparaîtront à la lecture de la description suivante, donnée à titre d'exemple purement illustratif et nullement limitatif, en se référant aux dessins annexés sur lesquels:

– La figure 1: est un schéma simplifié rappelant comment est constitué un transducteur intégré de type sabot,

– La figure 2: est un schéma de principe simplifié montrant un transducteur de type monopôle,

– La figure 3: composée des figures 3a, 3b et 3c illustre les inconvénients d'un transducteur de type monopôle à la lecture,

– Les figures 4, 5, 6: montrent une première forme de réalisation d'un transducteur intégré de type monopôle selon l'invention,

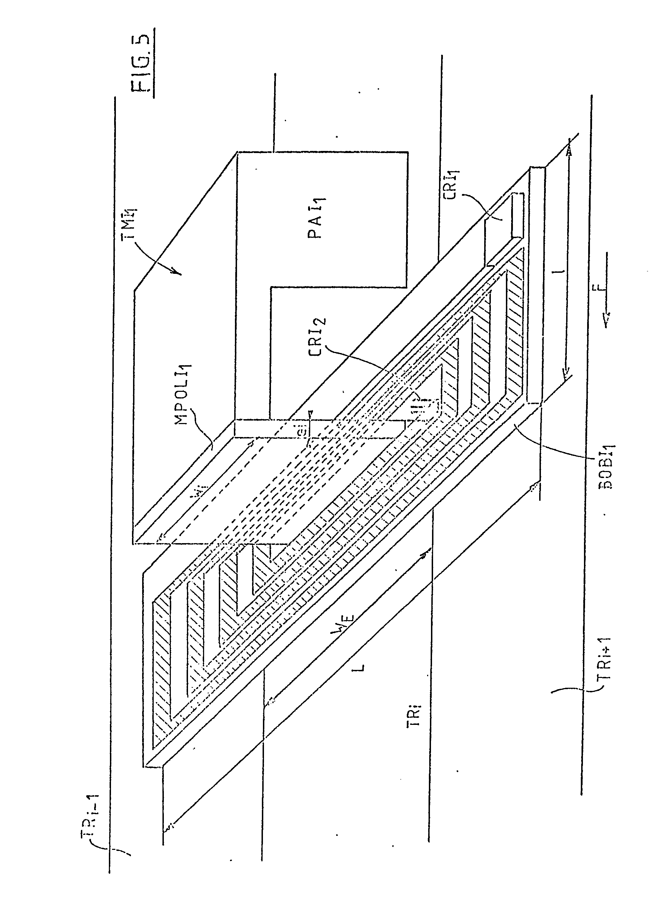

– La figure 4 étant une vue en coupe prise au niveau du bobinage, dans un plan perpendiculaire au support et parallèle au sens de défilement des informations,

– La figure 5 étant une vue de trois quart en perspective montrant le transducteur selon l'invention disposé en regard de trois pistes du support d'enregistrement,

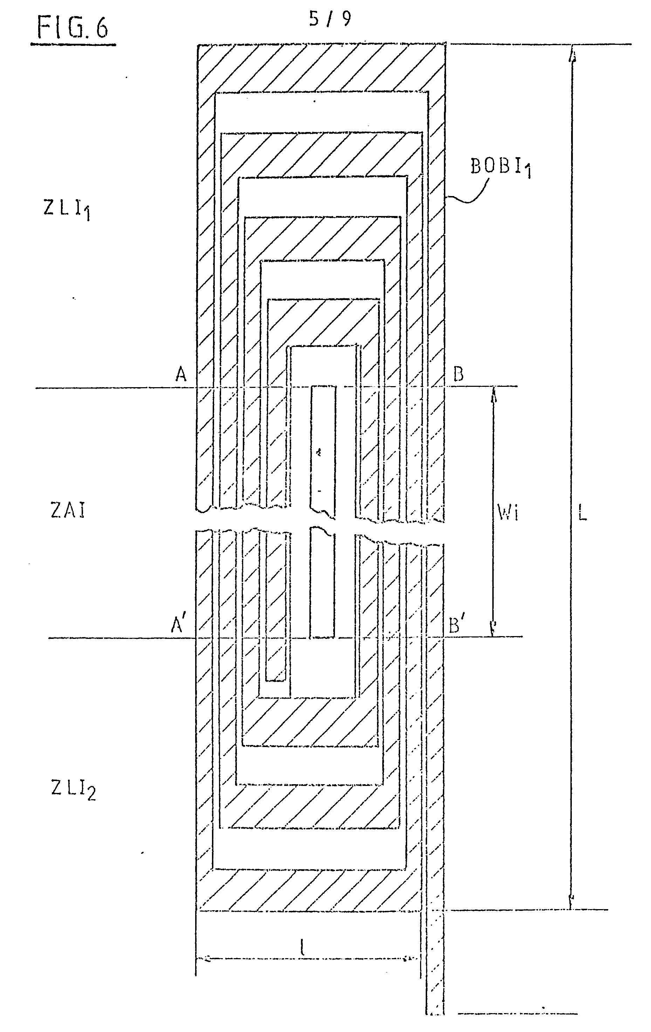

– La figure 6 étant une vue de dessus du bobinage du transducteur selon l'invention,

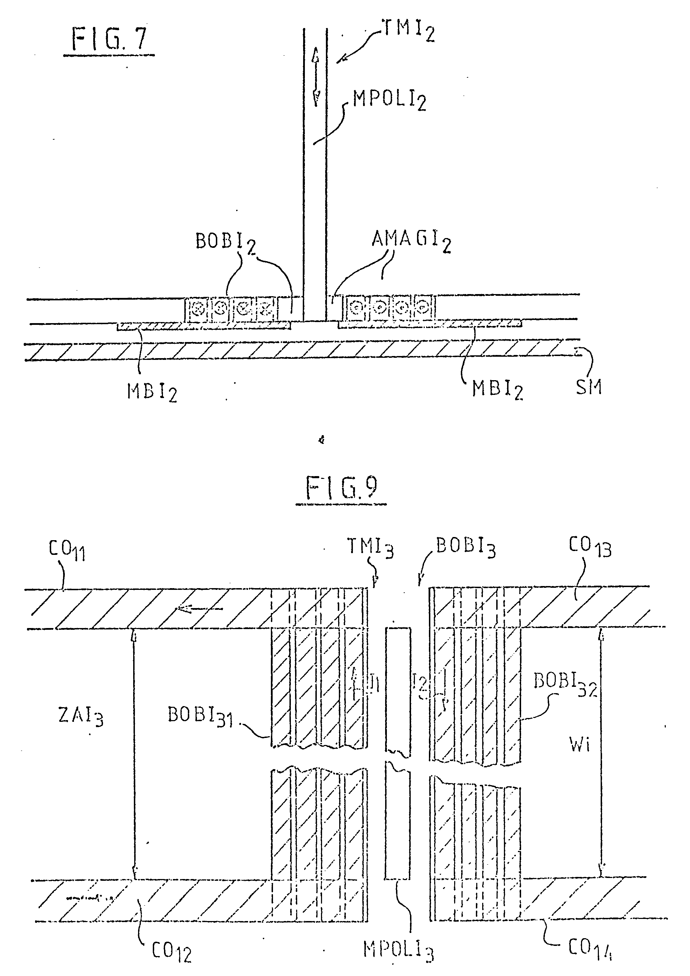

– La figure 7: est une vue en coupe prise dans un plan perpendiculaire au support et parallèle au sens de défilement des informations montrant une seconde forme de réalisation du transducteur selon l'invention,

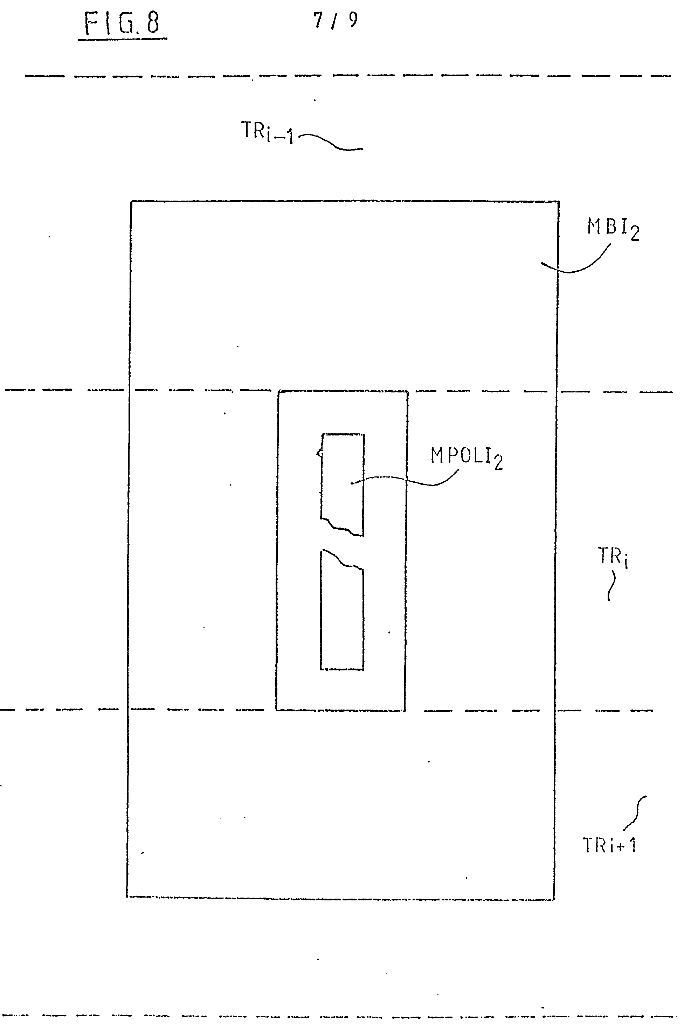

– La figure 8: montre, vue de dessous, depuis le support d'enregistrement le transducteur de la figure 7,

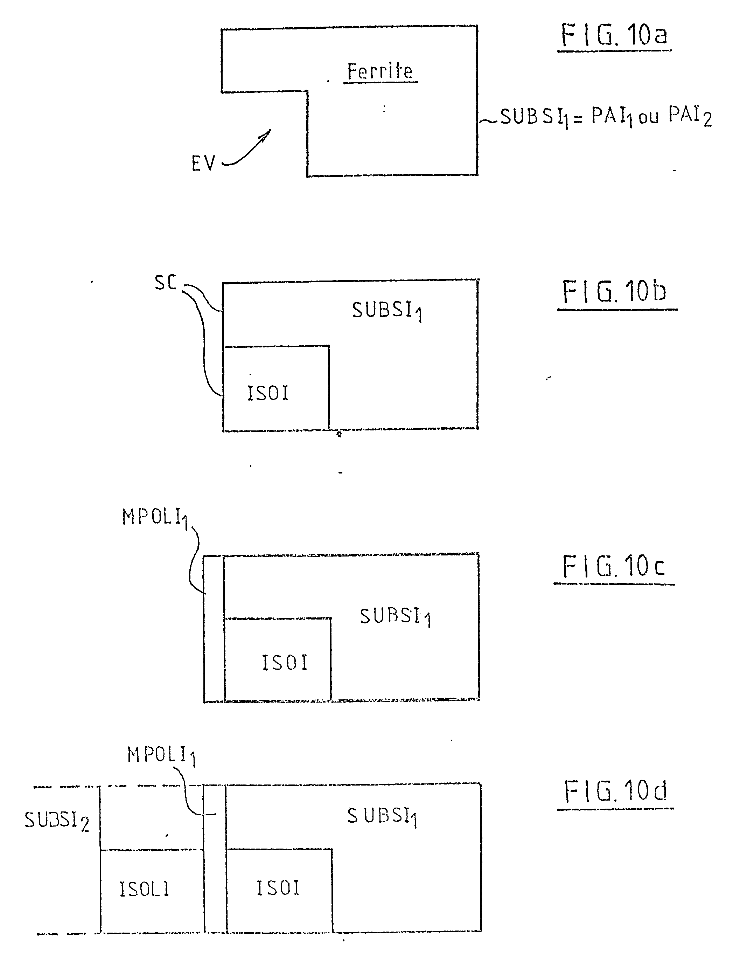

– La figure 9: montre une troisième forme de réalisation du transducteur selon l'invention,

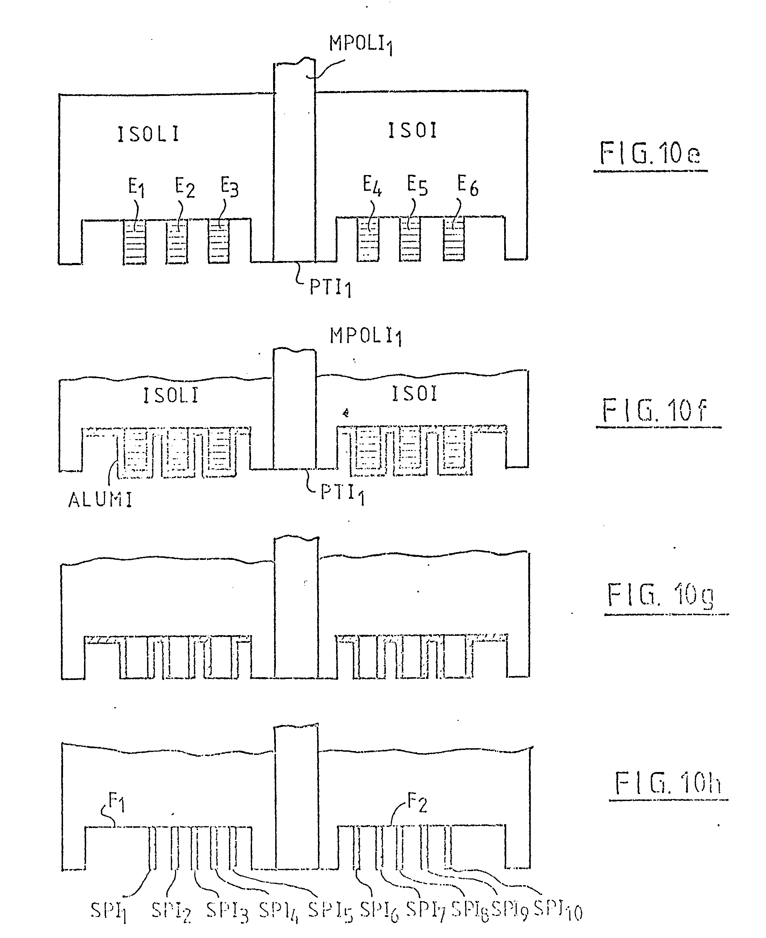

– La figure 10: illustre les différentes étapes du procédé de fabrication d'un transducteur selon l'invention.

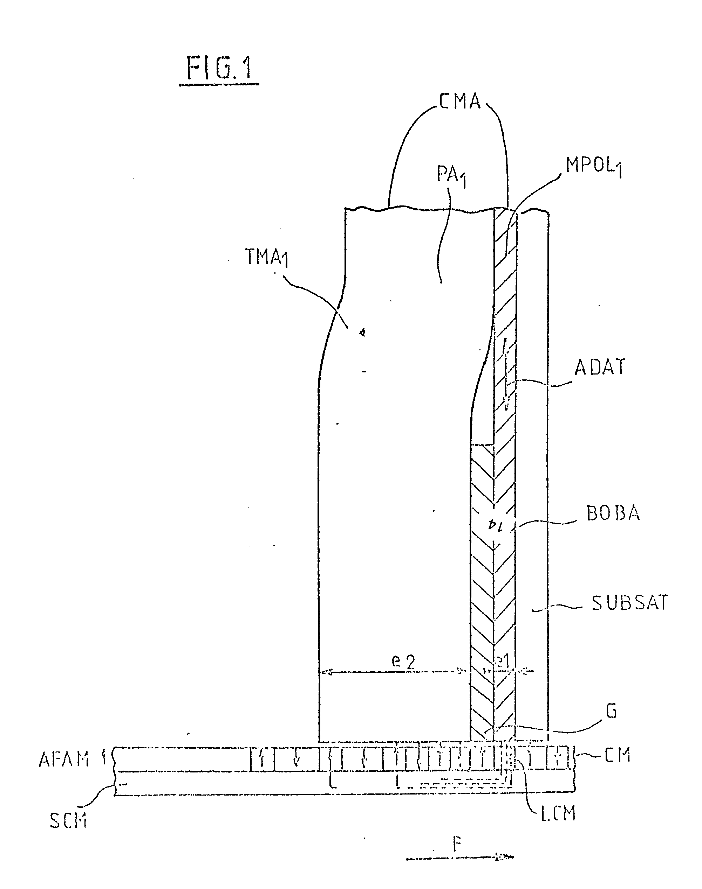

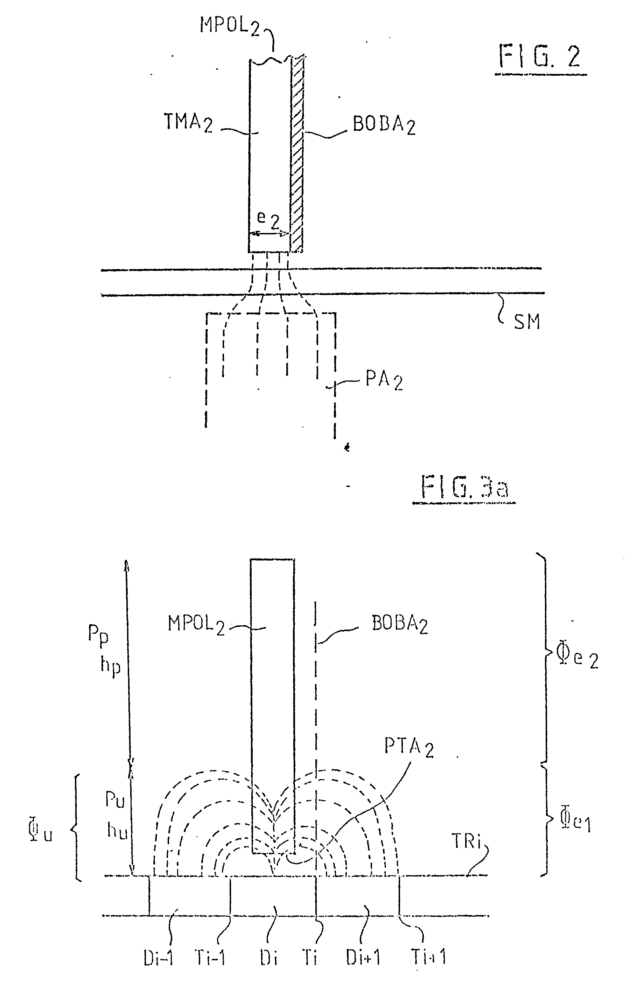

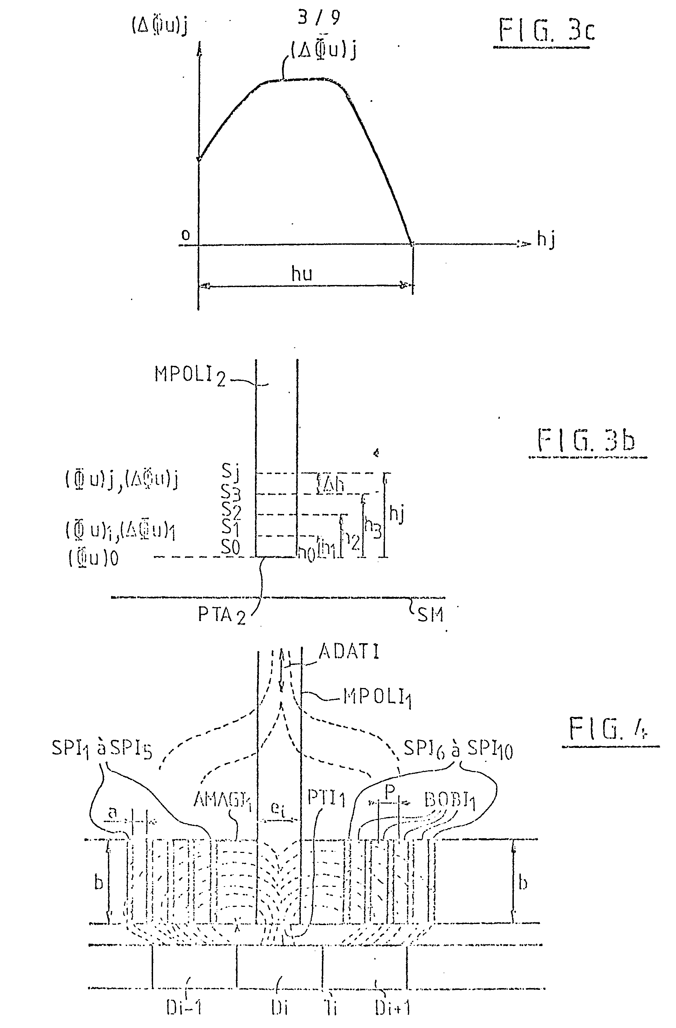

Afin de mieux comprendre comment est constitué et comment fonctionne le transducteur magnétique d'écriture/lecture selon l'invention, il est utile de faire quelques rappels sur la constitution et le fonctionnement des transducteurs magnétiques d'écriture/lecture de type monopôle selon l'art antérieur, et quels sont leurs inconvénients, plus particulièrement à la lecture. Ces rappels sont illustrés par les figures 1 et 2 montrant les deux différents types de transducteurs monopôle et la figure 3 montre les inconvénients de tels transducteurs à la lecture.

On considère la figure 1 qui montre un transducteur magnétique de type sabot désigné par $TMA_1$.

Ce transducteur $TMA_1$ compren:

– le pôle principal $MPOL_1$,

– le pôle auxiliaire $PA_1$,

– le bobinage BOBA dont le plan est perpendiculaire au support d'enregistrement SM.

Le pôle principal $MPOL_1$ et le pôle auxiliaire $PA_1$ sont disposés d'un même côté du support d'informations SM et présentent au voisinage de celui-ci un entrefer G dont la grande dimension est perpendiculaire au sens de défilement F des informations et au plan de la figure. Chacun des deux pôles, qui constituent le circuit magnétique CMA du transducteur $TMA_1$ est formé par exemple d'une pluralité de couches minces magnétiques séparées les unes des autres par des couches minces isolantes, ces différentes couches n'étant pas représentées à la figure 1 pour simplifier. Le pôle principal $MPOL_1$ est disposé sur un substrat magnétique SUBSAT. Le bobinage BOBA peut être réalisé sous deux formes différentes. La première consiste en un empilement d'une succession de couches minces conductrices et isolantes alternées et superposées, alors que la deuxième consiste en une spirale plane formée par exemple dans une seule couche mince conductrice disposée dans un plan perpendiculaire au plan de vol. L'épaisseur du pôle principal $MPOL_1$ (dimension mesurée selon une direction parallèle au sens de défilement F des informations) est très inférieure à l'épaisseur $e_2$ du pôle auxiliaire $PA_1$.

Très souvent, les pôles sont réalisés en matériau magnétique anisotrope. L'axe de difficile aimantation est l'axe ADAT normal au plan du support magnétique d'enregistrement SM. L'axe facile non représenté à la figure 1 est perpendiculaire au plan de la figure et au sens de défilement des informations.

Le support d'enregistrement SM est constitué d'une couche CM de matériau magnétique anisotrope disposée sur une sous-couche magnétique SCM. L'axe de facile aimantation de ce matériau magnétique CM est perpendiculaire à la surface du supnort d'enregistrement et est désigné par AFAM.

Pour écrire les informations sur le support SM qui défile dans le sens de la flèche F à vitesse constante, on envoie dans le bobinage un courant représentatif des informations à écrire, formé d'une succession de signaux carrés positifs et négatifs d'une durée variable. Le champ magnétique passant à travers les pôles créés par le passage du courant dans le bobinage a une composante importante selon la direction de difficile aimantation ADAT et le flux magnétique qui en résulte se ferme à travers la couche magnétique SM et la sous-couche SCM de la manière indiquée à la figure 1 par les lignes de flux LCM. En regard du pôle principal $MPOL_1$, le champ magnétique a une composante perpendiculaire au support d'enregistrement SM qui a une intensité beaucoup plus grande que la même composante en regard du pôle auxiliaire $PA_1$, en raison de la différence entre les épaisseurs $e_1$ et $e_2$, et par suite entre les sections du pôle principal et du pôle auxiliaire (voir ci-dessus).

On voit donc que le pôle principal MP $MPOL_1$ crée les informations sur le support SM sans que l'écriture de celles-ci soit perturbée par la présence du pôle auxiliaire $PA_1$, qui peut ou non voir ces informations défiler devant lui, suivant le sens de défilement choisi pour le support.

On considère la figure 2, qui montre un transducteur $TMA_2$ de type monopôle, tel que décrit dans l'article précité et dans les demandes de brevet européennes précitées suivant EP-A-71 489 et EP-A-101 352.

Ce transducteur $TMA_2$ comprend:

– le monopôle $MPOL_2$;

– le bobinage $BOBA_2$ dont le plan est perpendiculaire au support d'enregistrement SM.

Le transducteur $TMA_2$ peut ou non comporter un pôle auxiliaire $PA_2$ disposé de telle manière que ce dernier et le monopôle $MPOL_2$ soient placés de part et d'autre du support d'enregistrement SM analogue à celui représenté à la figure 1.

Le bobinage $BOBA_2$ peut être réalisé de la même manière que le bobinage $BOBA_1$ du transducteur $TMA_1$. En fonctionnement, à l'écriture, lorsqu'un courant circule dans le bobinage $BOBA_2$, le monopôle $MPOL_2$ est traversé par un flux magnétique dont on a représenté quelques lignes en traits interrompus à la figure 2. Ce flux magnétique se referme à l'infini. A l'inverse, à la lecture le champ magnétique de fuite créé par les différentes cellules enregistrées sur une piste magnétique du support SM crée un flux magnétique passant par le môle $MPOL_2$ et induit une force électromotrice d'induction aux bornes du bobinage $BOBA_2$.

On considère les figures 3a et 3b qui montrent les inconvénients d'un transducteur de type monopôle à la lecture.

On a considéré un support SM où la densité d'enregistrement est très élevée de l'ordre de 10 000 changements de sens de magnétisation par centimètre. Sur la figure on a représenté un certain nombre de ces changements de sens de magnétisation, ou transitions magnétiques à savoir les transitions $T_{i-1}$, $T_i$, $T_{i+1}$. La transition $T_i$ est disposée entre les deux cellules magnétiques $D_i$ et

$D_{i+1}$) la transition $T_{i+1}$ entre les deux cellules $D_{i+1}$ et $D_{i+2}$ etc .... On a tracé sur cette même figure 3 les lignes de flux magnétiques créées par les champs magnétiques de fuite de la cellule $D_i$ passant dans le monopôle $MPOL_2$ (ce pourrait être également le monopôle $MPOL_1$, les phénomènes physiques s'y produisant seraient les mêmes). Ces lignes de flux ont été observées par exemple par des méthodes de simulation sur ordinateur. On a supposé que l'épaisseur $e_2$ du monopôle $MPOL_2$ est de l'ordre du micron, les dimensions des cellules magnétiques $D_i$, $D_{i+1}$ etc ... enregistrées sur le support SM étant également de l'ordre du micron.

Dans ce cas, on voit que la majeure partie des lignes de flux magnétiques allant de la cellule $D_i$ vers les cellules $D_{i-1}$ et $D_{i+1}$, est canalisée par la pièce polaire $MPOL_2$ sur une hauteur $h_u$ très faible par rapport à la hauteur totale du monopôle $MPOL_2$. On a pu observer par simulation que cette hauteur $h_u$ était comprise entre 1 et 3 microns, c'est-à-dire de l'ordre de grandeur de l'épaisseur du pôle et de la dimension des différents cellules magnétiques $D_i$. Ces lignes de flux captées par le monopôle $MPOL_2$ sur une hauteur $h_u$ constituent le flux utile $\Phi u$ qui donne naissance au signal utile $S_u$ recueilli aux bornes du bobinage $BOBA_2$.

On a pu par contre observer que la plus grande partie $\Phi e_2$ du flux magnétique $\Phi e$ qui est produit essentiellement d'une part par les cellules entourant la cellule $D_i$ (dont $D_{i-1}$ et $D_{i+1}$) sur la même piste $TR_i$ que celle-ci et d'autre part, par les cellules situées sur les pistes voisines de $TR_i$, pénètre à l'intérieur du monopôle $MPOL_2$ dans la partie supérieure de celui-ci sur une hauteur hp, à partir d'une hauteur hu (hu est mesurée à partir de l'extrémité $PTA_2$ du monopôle). Une plus petite partie $\Phi el$ de ce flux $\Phi e$ pénètre le monopôle $MPOL_2$ sur la partie basse de la hauteur hu du monopôle. On rappelle que ce flux $\Phi e$ donne naissance au signal de bruit B, $\Phi el$ produisant un signal de bruit $B_1$ et $\Phi e2$ un signal de bruit $B_2$, avec généralement $V_2 > B_1$.

On peut donc diviser le monopôle $MPOL_2$ en deux parties, une partie utile $P_u$ de hauteur $h_u$ qui sert à collecter le flux magnétique donnant naissance au signal utile $S_u$, (et qui collecte aussi $\Phi e_1$) et une partie non utile, à savoir la partie $P_p$ de hauteure $h_p$, concourant à la production de la plus grande partie du signal de bruit B, à savoir $B_2$.

On considère une succession de sections $S_0$, $S_1$;..,$S_j$ du pôle d'écriture parallèles au support situées à des distances $h_0$, $h_1$;.., $h_j$ (également appelées hauteurs) de l'extrémité du pôle $PTA_2$ disposée en regard du support, (à deux ou trois dixièmes de microns de celui-ci), avec $h_1-h_0 = h_2-h_1 = h_3-h_2 = \triangle h$, avec $h_0=0$. On appelle $(\Phi u) 0$ le flux magnétique utile $\Phi u$ entrant dans le pôle au niveau de son extrémité c'est-à-dire pour $h_0=0$ et $(\Phi u) j$ le flux utile entrant dans le pôle entre les hauteurs $h_0$ et $h_j$, $(\triangle \Phi u) j$ l'accroissement de flux utile entre les hauteurs $h_{j-1}$ et $h_j$ c'est-à-dire tel que:

$$(\Phi u)_j = (\Phi u)_{j-1} + (\triangle \Phi u) j.$$

On a donc:

$$(\Phi u)_j = (\Phi u)_0 + \sum_1^j (\triangle \Phi u)_j$$

Si l'on mesure $(\triangle \Phi u) j$ entre $h_{j-1}$ et $h_j$ pour chaque valeur de $h_{j-1}$ et $h_j$ et que l'on trace les variations de $(\triangle \Phi u) j$ en fonction de $h_j$ on obtient la courbe de la figure 3c. A partir de la hauteur $h_j=h_u$, $(\triangle \Phi u)_j$ est nul.

En regardant les figures 3a et 3c, on voit que l'inconvénient des transducteurs de lecture de type monopôle est le suivant: d'une part, une grande partie du monopôle $MPOL_2$ est non utile et concourt à l'obtention d'un signal de bruit important et d'autre part un bobinage plan, disposé dans un plan perpendiculaire au sens de défilement des informations, ne collectera le flux utile que sur une faible partie de sa hauteur, sur un nombre réduit de tours, alors que la totalité du nombre de tours de ce dernier collectera le flux non utile et génèrera un signal de bruit important.

Le transducteur selon l'invention montré aux figures 4, 5, 6 remédie aux inconvénients mentionnés ci-dessus en disposant le bobinage au voisinage immédiat de l'extrémité du monopôle et autour de celui-ci, la hauteur du bobinage étant égale ou inférieure à la hauteur $h_u$. De la sorte, on augmente le signal utile Su et on diminue le signal de bruit B et le rapport Su/B est élevé.

Le transducteur $TMI_1$ de type monopôle selon l'invention comprend les différents éléments suivants:

Le monopôle ou pôle principal $MPOLI_1$ ayant un axe de difficile aimantation ADATI perpendiculaire au support d'enregistrement SM, ce dernier étant semblable au support montré aux figures 1 à 3,

Le bobinage $BOBI_1$ qui est une spirale à développement plan parallèlement au support, dont la hauteur b est égale ou inférieure à la hauteur utile $h_u$, et dont la densité de tours par unité de longueur mesurée parallèlement au sens de défilement du support (par micron) est extrêmement élevée.

Le transducteur $TMI_1$ comprend un pôle auxiliaire $PAI_1$ réalisé par exemple en ferrite, mais il est clair que l'invention s'applique également à tout transducteur de type monopôle soit comportant des pôles auxiliaires réalisé en d'autres matériaux magnétiques que la ferrite, soit réalisé en couches minces, soit ne comprenant pas de pôle auxiliaire.

Le bobinage $BOBI_1$ comporte quatre tours. On considère la section de chaque tour, dans un plan donné perpendiculaire au support d'enregistrement et parallèle au sens de défilement (le plan de coupe de la figure 4). On désigne par a la largeur de cette section mesurée parallèlement au sens de défilement et par b sa hauteur mesurée perpendiculairement au support, par c la distance entre le plan parallèle au support contenant l'extrémité $PRI_1$ du monopôle et la partie inférieure de chaque tour de bobinage (celle qui est en regard du support).

De préférence, l'extrémité inférieure de chaque tour de bobinage est contenue dans ce plan parallèle, c'est-à-dire que $c \cong 0$.

La hauteur b est telle que le rapport entre le flux utile $\Phi$ uc et le flux non utile $\Phi$ ec coupés par l'ensemble des tours du bobinage soit le plus grand possible, de façon à ce que le rapport Su/B soit optimum.

Généralement b est égal ou légèrement inférieur à hu.

On a a/b < 1. Ainsi, b peut être de l'ordre de 1 à 2 microns et a de l'ordre de 0,3 à 700 nm.

Etant donné les dimensions extrêmement faibles de la section de chaque tour et que celle-ci est plus haute que large (a/b < 1), on peut admettre que chaque section est assimilable à un segment de droite perpendiculaire au support d'enregistrement. Par extension, on dira que chaque section est perpendiculaire au support et même que chaque tour est perpendiculaire au support.

On désigne par p le pas entre les tours du bobinage (distance entre les axes de symétrie des sections de tours) (voir figure 4). Celui-ci est de l'ordre du micron.

Dans l'exemple de réalisation montré aux figures 4 à 6, le nombre de tours par micron est donc de l'ordre de 1, ce qui est une densité de tours par unité de longueur élevée pour un transducteur ayant des dimensions de l'ordre de celles indiquées plus haut.

Le bobinage $BOBI_1$ a une structure et des dimensions telles qu'il est très compact et concentré autour et au voisinage de l'extrémité $PTI_1$ du monopôle, ce qui permet:

1. D'améliorer le couplage magnétique entre le monopôle $MPOLI_1$ et le bobinage,

2. De concentrer le maximum de tours possible autour du monopôle, en regard d'une cellule donnée $D_i$ du support, ce qui permet de capter un flux magnétique utile provenant du monopôle $MPOLI_1$ élevé, et d'avoir un signal utile d'amplitude élevé.

Les deux facteurs énoncés ci-dessus combinés avec une hauteur b telle que $\Phi$ uc/ $\Phi$ ec soit maximum, font que le transducteur selon l'invention permet, avec le minimum de volume, d'avoir le meilleur rapport Su/B possible avec une amplitude de signal Su relativement élevée.

On désigne par $W_i$ la largeur du monopôle $MPOLI_1$, mesurée perpendiculairement au sens de défilement des informations F (voir figure 5).

Ainsi qu'on peut le voir sur cette même figure 5, le transducteur $TMI_1$ est montré disposé au-dessus de la piste $TR_i$ du support d'enregistrement SM. Les informations écrites sur chaque piste du support SM étant enregistrées par un transducteur analogue au transducteur $TMI_1$, il en résulte que la largeur $W_i$ du monopôle $MPOLI_1$ est sensiblement égale à la largeur de chaque piste $TR_i$ du support SM, largeur appelée $W_E$.

Pour des raisons évidentes de fabrication la longueur L du bobinage $BOBI_1$ mesurée perpendiculairement au sens de défilement des informations est supérieure à la largeur de piste $W_E$. De même la longueur 1 mesurée parallèlement au sens de défilement des informations est supérieure à l'épaisseur $e_i$ du monopôle $MPOLI_1$. (figures 5 et 6).

Il en résulte qu'une partie du bobinage $BOBI_1$ recouvre une partie des pistes $TR_{i+1}$ et $TR_{i-1}$ voisines de la piste $TR_i$ en regard de laquelle se trouve le monopôle $MPOLI_1$, lorsque le transducteur $TMI_1$ effectue les opérations de lecture de la piste $TR_i$.

On peut donc décomposer le bobinage $BOBI_1$ en trois parties, à savoir une partie centrale dite zone active du bobinage ZAI qui produit le signal utile de lecture $S_u$, et deux parties latérales à savoir $ZLI_1$ et $ZLI_2$ qui produisent plus particulièrement une partie du signal de bruit à savoir celle provenant des pistes voisines $TR_{i+1}$ et $TR_{i-1}$, de la piste $TR_i$ que le transducteur $TMI_1$ est en train de lire.

Pour améliorer encore davantage le rapport Su/B en diminuant le signal de bruit B, on donne aux différentes parties du bobinage, à savoir la partie centrale ZAI, et les deux parties latérales $ZLI_1$ et $ZLI_2$, des structures différentes.

La partie centrale ZAI est celle dont la section de chaque tour est décrite ci-dessus et comporte donc un nombre de tours très élevé par unité de longueur, c'est-à-dire de l'ordre d'un tour par micron. La surface de sa section est faible.

A l'inverse, dans les parties latérales $ZLI_1$ et le nombre de tours par unité de longueur est beaucoup plus faible que dans la partie centrale ZAI, et de plus, la section de chacun des tours de bobinage est plus grande que dans la partie centrale, le bobinage est ainsi moins efficace et on limite donc le signal de bruit B produit par les parties latérales $ZLI_1$ et $ZLI_2$, d'autant plus que celles-ci ne recouvrent que partiellement les pistes voisines $TR_{i-1}$ et $TR_{i+1}$.

Le bobinage $BOBI_1$ comporte des bornes d'arrivée et de départ de courant destinées à être connectées aux circuits de lecture (et d'écriture) de la mémoire à disques comportant le transducteur $TMI_1$, à savoir les bornes $CRI_1$ et $CRI_2$, l'une étant disposée ($CRI_2$) à l'extrémité interne centrale du bobinage, c'est-à-dire au début du premier tour (les tours sont comptés à partir du monopôle $MPOLI_1$), l'autre étant disposée à l'extrémité externe du dernier tour du bobinage (au droit de la piste $TR_{i+1}$, comme on le voit à la figure 5).

Le monopôle $MPOLI_1$ ayant une hauteur totale de 5 à 10 microns et le bobinage une hauteur b de 1 à 2 microns, on peut considérer que ce dernier est plan eu égard aux dimensions globales du transducteur $TMI_1$. On peut donc le considérer comme une spirale disposée autour de l'extrémité $PRI_1$ du monopôle $MPOLI_1$ et au voisinage de celle-ci, le développement de cette spirale s'effectuant dans un plan parallèle au support d'enregistrement. On dit encore que c'est une spirale à développement plan parallèlement au support d'enregistrement.

Chacun des tours de bobinage est enterré à l'intérieur d'une matière amagnétique $AMADI_1$. Il est séparé du tour voisin par un espaceur en matière amagnétique et isolante électriquement. Ainsi le bobinage $BOBI_1$ montré aux figures 4, 5, 6 comprend les espaceurs $SPI_1$ $SPI_2$ à $SPI_9$, $SPI_{10}$. Ces

espaceurs sont par exemple réalisés en alumine. La manière dont sont réalisés ces espaceurs est exposée dans la suite de la description consacrée au procédé de fabrication du transducteur selon l'invention.

Pour diminuer encore plus le signal de bruit B, on peut munir le transducteur selon l'invention de moyens de blindage $MBI_2$ disposés autour du monopôle (figures 7 et 8). On obtient ainsi le transducteur $TMI_2$ comportant le monopôle $MPOL_2$ et le bobinage $BOBI_2$. Les différents tours du bobinage sont noyés dans une matière isolante et magnétique $AMAGI_2$ et séparée par des espaceurs identiques à ceux montrés à la figure 4.

De même, le monopôle $MPOLI_2$ et le bobinage $BOBI_2$ sont semblables aux éléments $MPOLI_1$ et $BOBI_1$ du transducteur $TMI_1$. Les moyens de blindage $MBI_2$ sont disposés entre le bobinage $BOBI_2$ et le support SM et recouvrent la quasitotalité de la surface du bobinage $BOBI_2$ de manière à être disposée en regard aussi bien des cellules entourant la cellule $D_i$ sur la piste $TR_i$ que d'une portion des pistes $TR_{i+1}$ et $TR_{i-1}$. Ces moyens de blindage sont séparés du bobinage $BOBI_2$ par une couche amagnétique de manière à réduire sensiblement leur couplage magnétique avec celui-ci. (Cette couche est non représentée, pour ne pas surcharger la figure 7).

Ces moyens de blindafe $MBI_2$ sont réalisés en couches minces et de préférence en matière magnétique anisotrope, d'une manière analogue à celle décrite dans le brevet européen 0 040 994, déposé par la Compagnie Internationale pour l'Informatique CII Honeywell Bull, le 20 Mars 1981, sous le titre «Transducteur magnétique à entrefer de grande dimension variable pour la lecture ou l'écriture des informations d'un support magnétique».

Aussi bien pour le transducteur $TMI_1$ que pour le transducteur $TMI_2$ les différents tours de bobinage $BOBI_1$ et $BOBI_2$ sont connectés en série.

La figure 9 montre, vue de dessus, une forme de réalisation d'un transducteur $TMI_3$ ayant un monopôle $MPOLI_3$ (analogue à $MPOLI_1$ et $MPOLI_2$) et un bobinage $BOBI_3$ où les différents tours sont connectés entre eux en parallèle. A la différence du transducteur $TMI_2$, les parties latérales telles que $ZLI_1$ et $ZLI_2$ n'existent pas. Seule subsiste la partie centrale $ZAI_3$.

Le bobinage $BOBI_3$ se décompose alors en deux demi-bobinages $BOBI_{31}$ et $BOBI_{32}$, le bobinage $BOBI_{31}$ occupant la partie située à gauche du monopôle $MPOLI_3$ et le bobinage $BOBI_{32}$ la partie située à droite.

Les quatre tours du demi-bobinage $BOBI_{31}$ sont connectés en parallèle respectivement aux conducteurs $CO_{11}$ et $CO_{12}$ situés respectivement en haut et en bas de ce demi-bobinage alors que les quatre tours du demi-bobinage $BOBI_{32}$ sont connectés en parallèle aux conducteurs $CO_{13}$ et $CO_{14}$ situés respectivement en haut et en bas de ce dernier.

Les courants $I_1$ et $I_2$ circulant respectivement dans les tours de chacun des demi-bobinages $BOBI_{31}$ et $BOBI_{32}$ sont sensiblement identiques en valeur absolue et de sens opposé, aussi bien à la lecture qu'à l'écriture (de manière qu'à l'écriture, les champs produits par chacun des deux demi-bobinages s'ajoutent et non se retranchent). Il est évident quà la lecture, les deux courants $I_1$ et $I_2$ pourront être ajoutés de manière appropriée par les circuits de lecture de la mémoire à disques contenant le transducteur $TMI_3$.

On considère la figure 10 qui représente les différentes étapes du procédé de fabrication d'un transducteur selon l'invention tel que le transducteur $TMI_1$ ou le transducteur $TMI_2$. Les différentes étapes de ce procédé sont les suivantes:

Le procédé comprend deux phases principales, à savoir une phase $P_1$ relative α la fabrication du monopôle, et une phase $P_2$ relative à la fabrication du bobinage.

La phase $P_1$ comprend les étapes suivantes:

Etape $P_{1.1}$

(figure 10a). On réalise un substrat électriquement isolant, par exemple en ferrite, qui constituera le pôle auxiliaire du transducteur ($PAI_1$, $PAI_2$) selon l'invention. Ce substrat est dénommé SUBSI. Il a une forme de L renversé présentant un évidement EV dans sa partie intérieure gauche.

Etape $P_{1.2}$

On dépose un matériau isolant ISOI sur le substrat en ferrite $SUBSI_1$, de 1 à 3 microns d'épaisseur à l'intérieur de l'évidement EV. Cet isolant ISOI est un matériau non magnétique et isolant électriquement. L'ensemble formé par $SUBSI_1$ et $ISOLI_1$ présente une surface latérale verticale gauche SC que l'on rend plane, par exemple par rodage (figure 10b).

Etape $P_{1.3}$

On dépose un matériau magnétique sur toute la surface SC ayant la hauteur du substrat $SUBSI_1$ et une épaisseur d'environ 1 micron ayant sensiblement la forme d'un parallèlépipède rectangle qui constitue le monopôle $MPOLI_1$, par exemple (figure 10c).

Etape $P_{1.4}$

On réalise en isolant ISOLI symétrique de ISOI par rapport au monopôle $MPOLI_1$ (on peut également déposer un substrat $SUBSI_2$ en plus de ISOLI, symétrique de $SUBSI_1$ et réalisé en ferrite également, ce qui permet de réaliser un transducteur de type coaxial avec double circuit magnétique) par une opération d'assemblage plus connue sous le terme anglo-saxon de packaging utilisé couramment dans la terminologie des semiconducteurs (figure 10d).

Etape $P_{1.5}$

On planarise (on rend plane) la surface des isolants (ISOLI, ISOI) et de l'extrémité du monopôle ($MPOL_1$).

La phase $P_2$ comprend les étapes suivantes:

Etape $P_{2.1}$

On réalise d'abord les espaceurs $SPI_1$ à $SPI_{10}$ en

alumine selon la technique décrite par exemple par DC FLANDERS dans le journal of Vacuum science technology, B1(4) d'Octobre – Décembre 1983 à la page 0734–211X/83/0.

Cette phase $P_{2.1}$ se décompose de la manière suivante:

a) on réalise des éléments, par exemple six dé-nommés, $R_1$ à $E_6$ en oxyde de silicium $SiO_2$ (figure 9f) par photolithogravure et gravure à l'intérieur des isolants ISOLI et ISOI (figure 10e);

b) on dépose une mince couche d'alumine (isolante et amagnétique) ALUMI ayant l'épaisseur recherchée pour les espaceurs, sur toute la surface des éléments $E_1$ à $E_6$ (figure 9g);

c) on enlève, par exemple par gravure ionique ou par plasma, la partie inférieure (voir figure 10h) de la couche d'alumine ALUMI qui se trouve dans le plan de l'extrémité $PRI_1$ du monopôle $MPOLI_1$ (voir figure 9h);

d) on enlève les éléments $E_1$ à $E_6$ par gravure sé-lective et les parties de la couche ALUMI qui sont parallèles à l'extrémité $PTI_1$ du monopôle $MPOLI_1$.

Etape $P_{2.2}$

On réalise les différents tours du bobinage, par croissance d'une couche conductrice disposée entre les espaceurs, le matériau conducteur étant pulvérisé ou évaporé.

Etape $P_{2.3}$

On effectue une planarisation de l'ensemble de la structure du transducteur $TMI_1$ ainsi obtenue.

Les différentes étapes de fabrication aussi bien de la phase $P_1$ que de la phase $P_2$ utilisent les techniques de fabrication pour semi-conducteur, de type semi-conducteur à très haute intégration VLSI.

Le bobinage peut être réalisé, de préférence, soit en cuivre, soit en aluminum soit en or, soit en molybdène soit en tungstène.

## Revendications

1. Système d'enregistrement perpendiculaire comprenant un support d'enregistrement et un transducteur magnétique pour l'écriture et la lecture d'informations sur ce support, ce transduc-teur comprenant:

– un pôle d'écriture ($MPOLI_1$, $MPOLI_2$) en matériau magnétique à haute perméabilité, perpendiculaire au support d'enregistrement,

– un bobinage ($BOBI_1$, $BOBI_2$) couplé ma-gnétiquement au pôle d'écriture dont chaque section de tour considérée dans un plan perpendiculaire au support d'enregistrement a une hauteur b mesurée perpendiculairement à ce support sensiblement supérieure à la largeur a de cette même section mesurée parallèlement au sens de défile-ment du support, le bobinage étant constitué d'une spirale à developpement plan parallèlement au support, disposée autour du voisinage de l'ex-trémité ($PTI_1$) du pôle d'écriture ($MPOLI_1$) dis-posée en regard du support, le pôle d'écriture comprenant une partie utile $P_u$ de hauteur utile $h_u$ servant à collecter le flux magnétique, produit par les cellules élémentaires d'informations enregis-trées sur le support, qui donne naissance au signal utile et une partie non utile concourant à la production du signal de bruit, la hauteur utile $h_u$ mesurée perpendiculairement au support, à partir de l'extrémité du pôle disposée en regard de ce dernier, étant de l'ordre de grandeur de l'épaisseur du pôle mesurée parallèlement au défilement du support et de celle des dimensions des cellules élémentaires, caractérisé en ce que la hauteur b du bobinage est égale ou inférieure à la hauteur utile $h_u$ de la partie utile $P_u$ du pôle d'écriture ($MPOLI_1$, $MPOLI_2$).

2. Système d'enregistrement selon la revendication 1, caractérisé en ce que le bobinage du transducteur comprend une zone active centrale (ZAI) et deux parties latérales ($ZLI_1$–$ZLI_2$) entourant celle-ci, la section des tours et la densité de ceux-ci dans la zone active centrale étant respectivement inférieure et supérieure à la section des tours et leur densité dans les parties latérales.

3. Système d'enregistrement selon la revendication 1, caractérisé en ce que le bobinage ($BOBI_3$) comprend deux demi-bobinages séparés ($BOBI_{31}$–$BOBI_{32}$) déposés de part et d'autre du pôle d'écriture ($MPOLI_3$) dont les tours sont électriquement connectés en parallèle.

4. Système selon la revendication 1, 2, 3 caractérisé en ce que la hauteur b est comprise entre 1 et 3 microns.

5. Système selon l'une des revendications 1, 2, 3, 4, caractérisé en ce que le pas des tours du bobinage est de l'ordre du micron.

6. Système selon l'une des revendications 1, 2, 3, 4, 5, caractérisé en ce qu'il comprend des moyens de blindage ($MBI_2$) recouvrant la surface du bobinage et disposés autour du pôle d'écriture ($MPOLI_2$) entre le bobinage et le support d'enregistrement (SM).

7. Procédé de fabrication d'un transducteur uti-lisé dans un système selon la revendication 1, où la hauteur b du bobinage est de l'ordre de 1 à 3 microns et sa largeur a de l'ordre de 300 à 700 nm, comprenant dans l'ordre des étapes suivantes:

1) Phase de fabrication du monopôle:

a) On réalise un substrat électriquement isolant ($SUBSI = PAI_1 = PAI_2$) en matière magnétique,

b) On dépose un matériau isolant et amagnétique (ISOI) sur une partie du substrat puis on rode l'une des faces du substrat et l'isolant de manière à reconstituer une surface plane (SC),

c) On dépose le monopôle ($MPOLI_1$) en maté-riau magnétique sur la surface plan (SC),

d) On dépose un isolant (ISOLI) identique à l'i-solant (ISOI) et symétrique de ce dernier par rap-port au monopôle ($MPOLI_1$),

e) On planarise la surface des deux isolants (ISOLI, ISOI) et celle de l'extrémité du monopôle ($MPOLI_1$, $MPOLI_2$).

2) Phase de fabrication du bobinage:

f) On réalise une pluralité d'espaceurs en ma-tière isolante ($SPI_1$, $SPI_{10}$,

g) On réalise les différents tours du bobinage par croissance, en particulier par pulvérisation ou évaporation, d'une couche conductrice disposée entre les espaceurs,

h) On planarise l'ensemble de la structure ainsi obtenue.

**Patentansprüche**

1. System zur senkrechten Aufzeichnung, mit einem Aufzeichnungsträger sowie einem magnetischen Wandler zum Schreiben und zum Lesen von Informationen auf diesem Träger, wobei der Wandler umfasst:

– einen Schreibpol (MPOLI$_1$, MPOLI$_2$) aus einem eine hohe Permeabilität aufweisenden Material, der zu dem Aufzeichnungsträger senkrecht ist;

– eine magnetisch an den Schreibpol angekoppelte Wicklung (BOBI$_1$, BOBI$_2$), wovon jeder in einer zum Aufzeichnungsträger senkrechten Ebene betrachtete Windungsabschnitt eine senkrecht zu diesem Träger gemessene Höhe b aufweist, die wesentlich grösser als die Breite a desselben Querschnitts ist, welche parallel zu der Vorbeilaufrichtung des Trägers gemessen wird, wobei die Wicklung aus einer ebenen, parallel zu dem Träger abwickelbaren Spirale besteht, die in der Nähe des Endteils (PTI$_1$) des Schreibpols (MPOLI$_1$) um diesen angeordnet ist, der gegenüber dem Träger angeordnet ist, wobei der Schreibpol ein beitragendes Teil P$_u$ einer Nutzhöhe h$_u$ umfasst, das dazu dient, den Magnetfluss zu konzentrieren, welcher von den auf dem Träger aufgezeichneten elementaren Informationszellen erzeugt wird und das Nutzsignal erzeugt, sowie ein nicht beitragendes Teil umfasst, das zur Erzeugung des Störsignals zusammenwirkt, wobei die Nutzhöhe h$_u$, die senkrecht zum Träger ab dem Endteil des Pols gemessen wird, der ihm gegenüberliegt, in der Grössenordnung der Dicke des Pols, die parallel zum Vorbeilaufen des Trägers gemessen wird, sowie derjenigen der Abmessungen der Elementarzellen liegt, dadurch gekennzeichnet, dass die Höhe b der Wicklung gleich der oder kleiner als die Nutzhöhe h$_u$ des Nutzteils P$_u$ des Schreibpols (MPOLI$_1$, MPOLI$_2$) ist.

2. System zur Aufzeichnung nach Anspruch 1, dadurch gekennzeichnet, dass die Wicklung des Wandlers eine aktive Zentralzone (ZAI) sowie zwei diese Zone umgebende Seitenteile (ZLI$_1$, ZLI$_2$) umfasst, wobei der Querschnitt der Windungen sowie ihre Dichte in der aktiven Zentralzone kleiner, bzw. grösser als der Querschnitt der Windungen und deren Dichte in den Seitenteilen sind.

3. System zur Aufzeichnung nach Anspruch 1, dadurch gekennzeichnet, dass die Wicklung (BOBI$_3$) zwei getrennte Halbwicklungen (BOBI$_{31}$–BOBI$_{32}$) umfasst, welche beiderseits des Schreibpols (MPOLI$_3$) angeordnet sind, dessen Windungen elektrisch parallel geschaltet sind.

4. System nach den Ansprüchen 1, 2 und 3, dadurch gekennzeichnet, dass die Höhe b zwischen 1 und 3 Mikrometer liegt.

5. System nach einem der Ansprüche 1, 2, 3 und 4, dadurch gekennzeichnet, dass die Teilung der Wicklungswindungen in der Grössenordnung eines Mikrometers liegt.

6. System nach einem der Ansprüche 1, 2, 3, 4 und 5, dadurch gekennzeichnet, dass es Abschirmmittel (MBI$_2$) umfasst, welche die Oberfläche der Wicklung abdecken und um den Schreibpol (MPOLI$_2$) zwischen der Wicklung und dem Aufzeichnungsträger (SM) angeordnet sind.

7. Verfahren zur Herstellung eines Wandlers, der in einem System nach Anspruch 1 verwendet wird, in welchem die Höhe b der Wicklung in der Grössenordnung von 1 bis 3 Mikrometer und seine Breite a in der Grössenordnung von 300 bis 700 nm liegt, das der Reihe nach die folgenden Schritte umfasst:

1) Herstellungsablauf für das Einpolelement:

a) ein elektrisch isolierendes Substrat (SUBSI = PAI$_1$ = PAI$_2$) aus einem magnetischen Material wird hergestellt;

b) ein isolierendes sowie unmagnetisches Material (ISOI) wird auf ein Teil des Substrats aufgebracht, dann werden eine der Fläche des Substrats sowie der Isolierstoff eingeschliffen, so dass eine ebene Fläche (SC) wiederhergestellt wird;

c) das Einpolelement (MPOLI$_1$) aus einem magnetischen Material wird auf die ebene Fläche (SC) aufgebracht;

d) ein mit dem Isolierstoff (ISOI) identischer Isolierstoff (ISOLI), der zu diesem in Bezug auf das Einpolelement (MPOLI$_1$) symmetrisch ist, wird aufgebracht;

e) die Oberfläche der beiden Isolierstoffe (ISOLI, ISOI) sowie die Oberfläche des Endteils des Einpolelementes (MPOLI$_1$) MPOLI$_2$) werden geebnet.

2) Herstellungsablauf für die Wicklung:

f) eine Vielzahl von Abstandshaltern (SPI$_1$, SPI$_{10}$) aus einem isolierenden Material wird hergestellt;

g) die verschiedenen Windungen der Wicklung werden durch Aufwachsen einer leitenden Schicht, insbesondere durch Zerstäubung oder durch Verdampfung hergestellt, wobei diese Schicht zwischen den Abstandshaltern angeordnet ist;

h) die so erhaltene Gesamtstruktur wird geebnet.

**Claims**

1. A system for perpendicular recording comprising a recording carrier and a magnetic transducer for writing and reading data on this carrier, this transducer comprising:

– a write pole (MPOLI$_1$, MPOLI$_2$) of high-permeability magnetic material, perpendicular to the recording carrier,

– a coil (BOBI$_1$, BOBI$_2$) coupled magnetically to the write pole each winding section of which, considered in a plane perpendicular to the recording carrier, has a height b measured perpendicularly to this carrier which is substantially greater than the width a of this same section measured parallel to the direction of passage of the carrier, the coil being formed by a spiral with a plane development parallel to the carrier, disposed around the vicinity of the extremity ($PTI_1$) of the write pole ($MPOLI_1$) disposed facing the carrier, the write pole comprising a useful part $P_u$ having a useful height $h_u$ serving to collect the magnetic flux produced by the elementary cells of data recorded on the carrier, which gives rise to the useful signal, and a non-useful part contributing to the production of the noise signal, the useful height $h_u$ measured perpendicularly to the carrier from the extremity of the pole disposed facing this latter, being of the order of magnitude of the thickness of the pole measured parallel to the passage of the carrier and that of the dimensions of the elementary cells, characterised in that the height b of the coil is equal to or smaller than the useful height $h_u$ of the useful part $P_u$ of the write pole ($MPOLI_1$, $MPOLI_2$).

2. A recording system according to claim 1, characterised in that the coil of the transducer comprises an active central area (ZAI) and two lateral parts ($ZLI_1$–$ZLI_2$ surrounding the same, the section of the windings and the density of these in the active central area being respectively smaller and larger than the section of the windings and their density in the lateral parts.

3. A recording system according to claim 1, characterised in that the coil ($BOBI_3$) comprises two separate half-coils ($BOBI_{31}$–$BOBI_{32}$) disposed at either side of the write pole ($MPOLI_3$) the turns of which are electrically connected in parallel.

4. A system according to claim 1, 2, 3, characterised in that the height b is between 1 and 3 microns.

5. A system according to one of the claims 1, 2, 3, 4, characterised in that the pitch of the coil windings is of the order of a micron.

6. A system according to one of the claims 1, 2, 3, 4, 5, characterised in that it comprises screening means ($MBI_2$) covering the surface of the coil and disposed around the write pole ($MPOLI_2$) between the coil and the recording carrier (SM).

7. A method for the production of a transducer utilised in a system according to claim 1, in which the height b of the coil is of the order of 1 to 3 microns and its width a is of the order of 300 to 700 nm, comprising the following stages in this sequence:

1) Monopole production phase:
   a) producing an electrically insulating substrate ($SUBSI = PAI_1 = PAI_2$) of magnetic material,
   b) depositing an insulating and amagnetic material (ISOI) on a part of the substrate, then grinding one of the faces of the substrate and the insulating material to reconstitute a plane surface (SC),
   c) depositing the monopole ($MPOLI_1$) of magnetic material on the plane surface (SC),
   d) depositing an insulator (ISOLI) identical to the insulator (ISOI) and symmetrical to this latter with respect to the monopole ($MPOLI_1$),
   e) making planar the surface of the two insulators (ISOLI, ISOI) and that of the extremity of the monopole ($MPOLI_1$, $MPOLI_2$).

2) Coil Production Phase:
   f) producing a plurality of spacers of insulating material ($SPI_1$, $SPI_{10}$).
   g) producing the different windings of the coil by the growth, in particular by atomisation or evaporation, of a conductive layer disposed between the spacers,
   h) making planar the whole of the structure thus obtained.

FIG.1

FIG. 2

FIG. 3a

13

$(\Delta\bar{\Phi}u)j$

$(\Delta\bar{\Phi}u)j$

$\underline{F\,I\,G.\ 3c}$

o → hj

hu

$\underline{F\,I\,G.\ 3b}$

MPOLI$_2$

$(\bar{\Phi}u)j,(\Delta\bar{\Phi}u)j$

$(\bar{\Phi}u)_1,(\Delta\bar{\Phi}u)_1$
$(\bar{\Phi}u)0$

Sj
S3
S2
S1
S0

hj
h3
h2
h0 h1

PTA$_2$ SM

$\underline{F\,I\,G.\ 4}$

ADATI

MPOLI$_1$

SPI$_1$ à SPI$_5$

SPI$_6$ à SPI$_{10}$

AMAGI$_1$ e$_i$ PTI$_1$ P BOBI$_1$

a

b b

Di-1 Di Ti Di+1

15

FIG. 5

EP 0 188 944 B1

TRi-1

TMI₁

MPOLI₁

PAI₁

WI

L

WE

CRI₂

TRi

CRI₁

TRi+1

BOBI₁

l

F

FIG.6

$ZLI_1$

$BOBI_1$

$ZAI$

A        B

$Wi$        $L$

$A'$        $B'$

$ZLI_2$

$l$

FIG.7

$TMI_2$

$MPOLI_2$

$BOBI_2$

$AMAGI_2$

$MBI_2$

$MBI_2$

SM

FIG.9

$CO_{11}$

$TMI_3$

$BOBI_3$

$CO_{13}$

$ZAI_3$

$BOBI_{31}$

$I_1$

$I_2$

$BOBI_{32}$

Wi

$CO_{12}$

$MPOLI_3$

$CO_{14}$

F I G. 8

$\underline{\text{F I G. 10a}}$

Ferrite

EV

$\sim$ SUBSI$_1$ = PAI$_1$ ou PAI$_2$

$\underline{\text{F I G. 10b}}$

SC

SUBSI$_1$

ISOI

$\underline{\text{F I G. 10c}}$

MPOLI$_1$

SUBSI$_1$

ISOI

$\underline{\text{F I G. 10d}}$

MPOLI$_1$

SUBSI$_2$

SUBSI$_1$

ISOL1

ISOI

25

MPOLI$_1$

ISOLI      ISOI

E$_1$   E$_2$   E$_3$     E$_4$   E$_5$   E$_6$

PTI$_1$

FIG. 10e

MPOLI$_1$

ISOLI      ISOI

ALUMI     PTI$_1$

FIG. 10f

FIG. 10g

F$_1$             F$_2$

SPI$_1$   SPI$_2$   SPI$_3$   SPI$_4$   SPI$_5$   SPI$_6$   SPI$_7$   SPI$_8$ SPI$_9$ SPI$_{10}$

FIG. 10h

27